# DEMANDE DE BREVET EUROPEEN

(11) **EP 1 096 701 A1**
(43) Date de publication de la demande: **02.05.2001**
(21) Numéro de dépôt: 00402974.0
(22) Date de dépôt: 26.10.2000
(51) Int. Cl.: H04B 7/26, H04Q 7/30

(54) **Transmission de données sur un canal de parole dans un réseau de téléphonie mobile**

(30) Priorité: 28.10.1999 FR 9913496
(71) Demandeur: ALCATEL, 75008 Paris (FR)
(72) Inventeur: Zaizouni, Mostafa, 95600 Eaubonne (FR); Gervais, Aurélie, 75007 Paris (FR)
(74) Mandataire: Lamoureux, Bernard

(57) **Abrégé**

L'invention est relative à un dispositif de radiocommunication pour la transmission de données via le canal parole d'un système de radio-télécommunications, comprenant un codeur de parole (13) pour coder des signaux représentatifs de parole en vue de la transmission radio de ces signaux via un canal parole. Le dispositif comprend en outre une unité (11) de modulation numérique de phase ou de fréquence de signaux représentatifs de données, dont la sortie est connectée à l'entrée dudit codeur de parole (13) en vue de la transmission des signaux modulés représentatifs de données via le canal parole.

## Description

La présente invention a pour objet des dispositifs de radiocommunication pour la transmission et la réception de données sur un canal de parole dans le domaine de la téléphonie mobile.

Dans l'invention on résout les problèmes liés aux particularités de la transmission de données quand elle est effectuée dans un canal de parole et qu'elle peut y subir des transcodages correspondant à un codage de parole dans un réseau.

Dans le domaine de la téléphonie mobile, on connaît les canaux de transmission de parole et les canaux de transmission de données. Les canaux de transmission de données nécessitent un codage différent du codage de la parole. Ils exploitent des équipements du réseau qui sont particuliers au mode de données. En pratique, un abonnement spécifique doit être souscrit à cet effet auprès d'un opérateur de téléphonie mobile. On peut de cette façon avoir accès à une transmission de données, de point à point, en mode de commutation de circuits, à une vitesse de 9600 bits par secondes.

Dans le domaine de la téléphonie cellulaire GSM, on dispose par ailleurs de moyens de transmission de données exploitant des canaux de signalisation du système cellulaire. On distingue à cet effet des canaux dits SMS (Short Message Service) qui permettent de transmettre jusqu'à 300 bits par seconde, ou des canaux dits USSD (Unstructured Supplementary Service Data) destinés à acheminer des débits de l'ordre de 800 bits par seconde.

USSD présente l'inconvénient que d'une part les informations ne transitent que d'un utilisateur vers le réseau et que d'autre part, ce service nécessite la souscription à un abonnement spécifique.

Dans le cas des canaux SMS, les informations peuvent être échangées d'utilisateur à un autre, ou du réseau vers un utilisateur et sont facturées par paquets échangés, le coût actuel étant élevé.

Le but de l'invention est de permettre la transmission de données quelconques sur un réseau de téléphonie mobile, avec un débit convenable, sans pour autant devoir souscrire à un abonnement supplémentaire.

L'invention permet en particulier, de mettre en oeuvre des services d'accès à l'Internet. Elle permet également la mise à jour et la maintenance à distance de terminaux par un opérateur.

Ce qui différencie le codage de la parole du codage des données, notamment pour la transmission en téléphonie mobile, est essentiellement la nature des informations numérisées représentatives de la parole. En effet, la parole, si elle est numérisée simplement, produit des informations numériques pléthoriques. Pour éviter dans le cadre de la téléphonie mobile les encombrements en fréquence des canaux de transmission que de trop grands débits d'informations provoqueraient, il a été mis au point des codages de la parole de type particulier.

Ces codages particuliers, dits codages de source ou codages de parole, consistent dans leur principe à rechercher des caractéristiques représentatives de la production de la parole par l'homme. Dans ces caractéristiques, on distingue trois grandeurs. Ces grandeurs sont :
une fréquence fondamentale (dite pitch en littérature anglo-saxonne) correspondant à une vibration des cordes vocales ;
un filtrage correspondant aux modifications de la vibration fondamentale et résultant de la propagation de la vibration dans le système phonatoire, c'est-à-dire le larynx, le pharynx et la bouche ;
une excitation (ou erreur) correspondant à un résidu issu de la modélisation précédente appliquée aux paroles prononcées.

Un codeur de source de type GSM établit des meilleures valeurs de ces trois types de grandeurs à partir d'un signal PCM (Pulse Code Modulation). Un signal PCM est un signal échantillonné, dans un exemple à une fréquence de 8 000Hz et quantifié sur 13 bits, à partir du signal de parole. Le débit du signal PCM est donc de 104 Kbits/s dans cet exemple. Le codeur de source effectue une étape dite d'analyse ou codage de ce signal PCM.

Il existe différents types de codage de source. Ainsi, dans l'exemple d'un réseau GSM, on distingue en particulier trois types de codage de source:
" Full Rate", pour " plein débit" en anglais (abrégé "FR" par la suite) ; recommandation ETSI SMG 6.10,
" Half Rate ", pour " demi débit" en anglais (abrégé "HR" par la suite) ; recommandation ETSI SMG 6.20, et
" Enhanced Full Rate ", pour " plein débit rehaussé" en anglais (abrégé "EFR" par la suite) ; recommandation ETSI SMG 6.60.

Bien entendu, les principes de la présente invention sont également applicables aux autres réseaux de téléphonie mobile (DCS-1800, PCS, etc. ...).

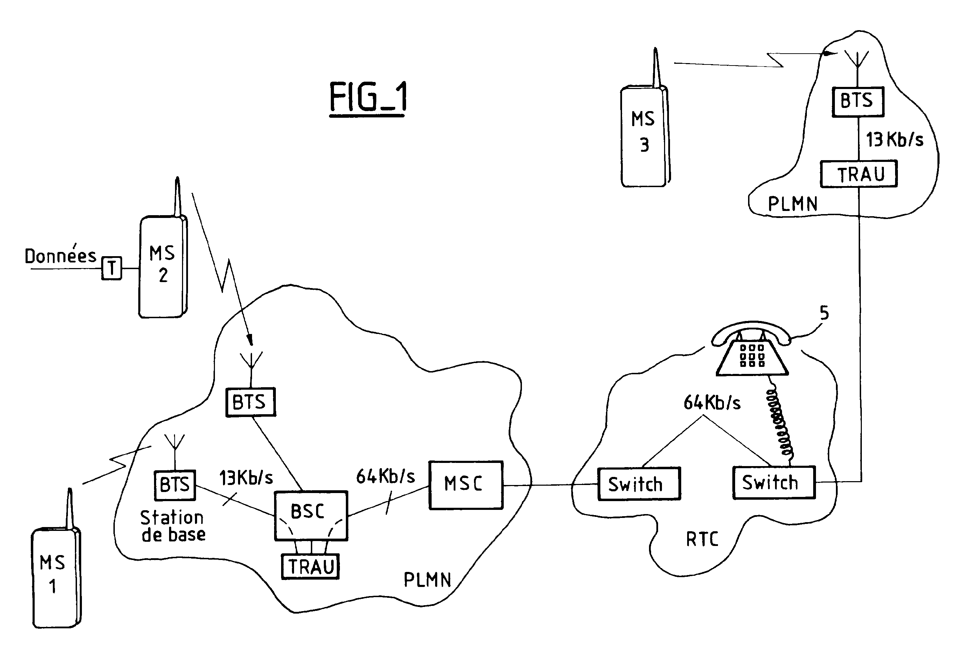

La figure 1 illustre un mode de communication entre deux mobiles n'ayant pas un type de codage de source en commun.

Comme on le voit sur cette figure, les informations de parole, codées et protégées, sont transmises par un téléphone mobile MS1 à un réseau de téléphonie mobile PLMN (Public Land Mobile Network). Le réseau PLMN effectue le décodage de canal de ces informations de parole dans des stations de base BTS (Base Transceiver Station), et produit des données au format de parole GSM. C'est-à-dire comme si elles sortaient d'un codeur de source. Puis le réseau PLMN transcode les données au format de parole GSM en des données en un format communément utilisé dans les réseaux téléphoniques à commutation de circuit. Ce dernier format dit PCM loi-A conduit à un débit de 64kbits/s correspondant à 8000 échantillons par seconde codés sur 8 bits. Ce transcodage est effectué par un équipement du réseau PLMN dit TRAU (Transcoder Rate Adaptation Unit) généralement situé à l'endroit de circuits dits MSC (Mobile services Switching Centers) de ce réseau.

Le transcodage TRAU consiste à effectuer la synthèse de la parole par un décodeur équivalent au processus inverse du codeur de source décrit plus haut. On obtient alors un signal de parole en représentation PCM (Pulse Code modulation) formé de 8000 échantillons par secondes codés sur 13 bits, comme le signal original, auquel on applique une transformation logarithmique dite Loi-A qui code chaque échantillon sur 8 bits (soit 64kbit/s). Cette nouvelle forme du signal de parole contient toutes les informations physiques du signal précédent au format GSM, aux erreurs de transmission et de transcodage près. Ce signal au format PCM loi A est transmis à un réseau commuté RTC, notamment filaire.

Dans ce réseau commuté RTC, ce signal à 64 Kbits par seconde est soit transformé en un signal analogique soit transmis dans des circuits numériques. Puis il est acheminé jusqu'à un destinataire sur ce réseau commuté, par exemple le poste téléphonique 5.

Ou bien il est acheminé jusqu'à un autre équipement de type TRAU si le destinataire est par exemple un autre téléphone mobile MS3 et lui aussi localisé sur un réseau cellulaire de téléphonie mobile. Cet autre équipement TRAU effectue une transformation inverse du premier équipement TRAU, et est dit ici TRAU inverse, pour le remettre au débit et au format GSM.

On voit donc sur cette figure 1, que le signal de parole initial au format GSM à 13 Kbits/s peut ainsi subir plusieurs transcodages TRAU ou inverse. Chaque étape de transcodage et de transmission est susceptible de dégrader le contenu de ce signal. En particulier, si on souhaite rétablir le format GSM à 13kbit/s en bout de chaîne de réception, la parole audible sera très proche de celle en bout de chaîne d'émission mais les valeurs des paramètres du modèle (LTP, LAR, RPE) peuvent être sensiblement différentes.

Quand on veut utiliser un canal de parole pour transmettre des données, il n'est donc pas possible de remplacer sans traitement préalable les bits descriptifs de ces paramètres au niveau de l'émetteur par les données à transmettre pour pouvoir les récupérer au niveau du récepteur. En effet, en agissant ainsi, des erreurs apparaîtraient en bout de chaîne. De plus les transcodeurs sont bien adaptés à la manipulation de paramètres typiques de la parole humaine. Si on remplace les bits descriptifs de ces paramètres par des données brutes, on obtient des configurations de bits a priori aléatoires. Il est possible alors que les circuits d'analyse et de synthèse ne sachent pas reproduire ces configurations. Par exemple c'est le cas si ces configurations de bits représentent des variations brutales de l'énergie des blocs ou de la valeur du pitch.

La présente invention vise à pallier les inconvénients des procédés précités de transmission de données en proposant un dispositif de radiocommunication qui permette une transmission de données fiable et à débit satisfaisant par le canal parole de téléphonie mobile.

A cet effet, l'invention a pour objet un dispositif de radiocommunication pour la transmission de données via le canal parole d'un système de radio-télécommunications, comprenant un codeur de parole pour coder des signaux représentatifs de parole en vue de la transmission radio de ces signaux via un canal parole, caractérisé en ce qu'il comprend en outre une unité de modulation numérique de phase ou de fréquence de signaux échantillonnés représentatifs de données, dont la sortie est directement connectée à l'entrée dudit codeur de parole en vue de la transmission des signaux modulés représentatifs de données via le canal parole.

Le dispositif de radiocommunication pour la transmission de données peut en outre présenter une ou plusieurs des caractéristiques suivantes :
- le débit D des données à transmettre et la fréquence porteuse f_{c} de la modulation sont choisis de manière que la forme du lobe principal du spectre de modulation à l'entrée du codeur de parole soit sensiblement conservé après un passage dans le codeur de parole, puis dans un décodeur de parole correspondant,
- ladite unité de modulation numérique étant configurée de manière qu'au moins 75% de la puissance des signaux modulés représentatifs des données est confinée dans le lobe principal du spectre de modulation de phase ou de fréquence,
- la fréquence porteuse f_{c} de la modulation est approximativement égale à 0,78 ∗ D,
- ladite unité de modulation numérique met en oeuvre une modulation MSK
- le débit D des données et la fréquence porteuse f_{c} de la modulation numérique de ladite unité sont choisies de manière que le taux d'erreur de transmission des données est égal ou inférieur à un seuil prédéterminé,
- le seuil de taux d'erreur de transmission est égale à 10⁻³,
- le seuil de taux d'erreur de transmission est égale à 10⁻⁵,
- dans le cas où le codeur de parole est un codeur FR, le débit maximal de transmission de données est inférieur ou égale à 1 200bits/s,
- la fréquence porteuse f_{c} de la modulation numérique de ladite unité de modulation numérique est inférieure ou égale à 1300Hz.

L'invention a également pour objet un téléphone mobile, caractérisé en ce qu'il comprend un dispositif de radiocommunication pour la transmission de données tel que défini ci-dessus.

De plus, l'invention a pour objet un équipement de transcodage d'un réseau cellulaire de télécommunications, caractérisé en ce qu'il comprend un dispositif de radiocommunication pour la transmission de données tel que défini ci-dessus.

En outre, l'invention a pour objet un dispositif de radiocommunication pour la réception de données via le canal parole d'un système de radio-télécommunications, comprenant un décodeur de parole pour décoder des signaux représentatifs de parole suite à une réception radio de ces signaux via un canal parole, caractérisé en ce qu'il comprend en outre une unité de démodulation numérique de phase ou de fréquence de signaux échantillonnés modulés représentatifs de données, dont l'entrée est directement connectée à la sortie dudit décodeur de parole.

Le dispositif de radiocommunication pour le réception des données peut présenter la caractéristique selon laquelle ladite unité de démodulation est une unité correspondant à l'unité de modulation du dispositif de radiocommunication pour la transmission de données tel que défini ci-dessus.

L'invention a également pour objet un téléphone mobile, caractérisé en ce qu'il comprend un dispositif de radiocommunication pour la réception de données tel que défini ci-dessus.

Enfin, l'invention a pour objet un équipement de transcodage d'un réseau cellulaire de télécommunications, caractérisé en ce qu'il comprend un dispositif de radiocommunication pour la réception de données tel que défini ci-dessus.

D'autres caractéristiques et avantages de la présente invention ressortiront de la description suivante, donnée à titre d'exemple, sans caractère limitatif, en regard des dessins annexés sur lesquels :
- La figure 1, déjà commentée, est une représentation schématique du réseau GSM et des différentes étapes de transcodage rencontrées ;
- La figure 2 montre un dispositif de radiocommunication pour la transmission de données via un canal parole et un dispositif correspondant de radiocommunication pour la réception de ces données ; et
- La figure 3 présente un graphique montrant la densité spectrale de puissance d'un spectre de modulation MSK en fonction de la fréquence adapté pour un codeur de parole FR.

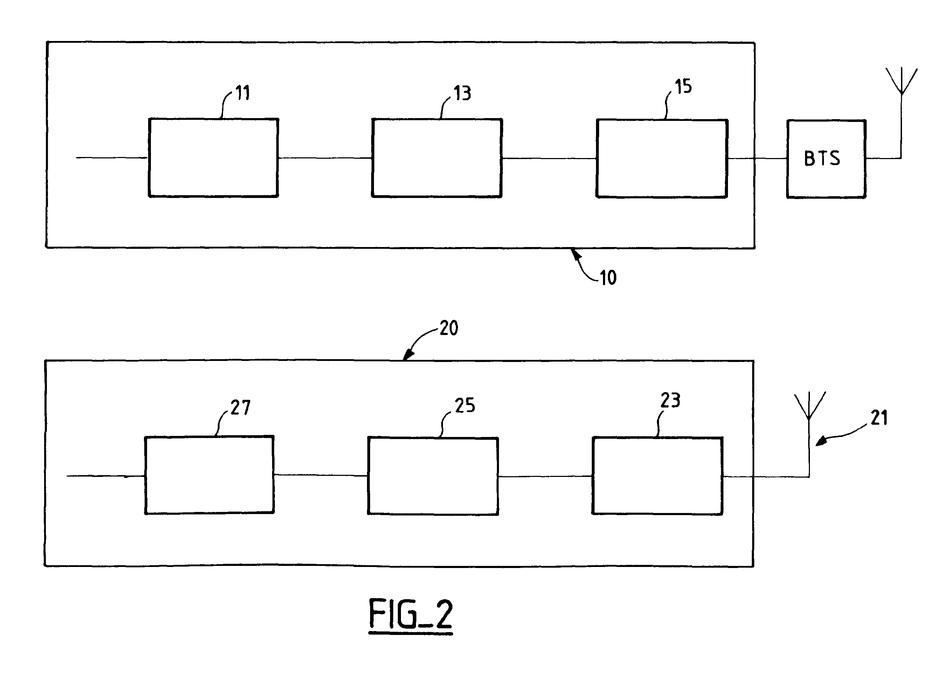

La figure 2 présente un dispositif 10 de radiocommunication pour la transmission de données et un dispositif correspondant 20 de radiocommunication pour la réception de données véhiculées via le canal paroles d'un réseau de radiotéléphonie par exemple un réseau cellulaire, tel que le réseau GSM.

Le dispositif 10 est par exemple installé dans un équipement de transcodage, également appelé équipement TRAU, mentionné dans le préambule de la description, tandis que le dispositif 20 correspondant est installé dans téléphone mobile par exemple du type cellulaire GSM, DCS- 1800, PCS ou UMTS.

Cette configuration est par exemple avantageuse pour la remise à jour à distance de logiciels dans le téléphone mobile.

Bien entendu, l'implantation des dispositifs 10 et 20 peut également être inversée, c'est-à-dire, c'est le dispositif 10 qui est compris dans un téléphone mobile tandis que le dispositif 20 est compris dans un équipement TRAU. Cette configuration est par exemple avantageuse pour l'envoi de commandes ou par exemple d'images prises avec un équipement de prise de vue raccordé au téléphone mobile ou incorporé dans celui-ci.

Selon un mode de réalisation préférentielle, aussi bien le téléphone mobile que l'équipement TRAU disposent de l'un et de l'autre des dispositifs 10 et 20, de sorte qu'un réel échange de données peut être envisagé. Dans ce mode de réalisation, des consultations des pages de la toile ("WEB" en anglais) sur Internet se réalisent aisément.

Le dispositif de radiocommunication 10 comprend une unité de modulation numérique 11 de phase ou de fréquence, par exemple du type MSK (pour "minimum shift keying" en anglais, ce qui signifie : modulation par déplacement de phase minimale). Cette unité 11 reçoit en entrée des signaux numériques représentatifs des données à transmettre via le canal parole. Ces données peuvent être de toutes sortes. Elles peuvent être des données représentant des commandes, des mises à jour de paramètres de fonctionnement du mobile, du texte ou par exemple des images.

La sortie de l'unité 11 est reliée à l'entrée d'un codeur de parole 13, également appelé codeur de source ou codeur de voix, par exemple du type FR pour " Full Rate " en anglais ce qui signifie " plein débit " (abrégé "FR" par la suite) ; recommandation ETSI SMG 6.10. Bien entendu, le codeur de parole 13 peut aussi être du type EFR ou HR mentionnés plus haut dans le préambule de la description.

La sortie du codeur de parole 13 est reliée de manière connue par l'intermédiaire d'une chaîne 15 de transmission, telle qu'une chaîne de transmission GSM, à une station de base BTS avec son antenne 17 de transmission pour la transmission radio des données via le canal vers un dispositif 20 de réception correspondant.

Bien entendu, si le dispositif 10 selon l'invention est implanté dans un équipement TRAU destiné aussi bien à la transmission de parole que celle des données via le canal parole, cet équipement TRAU dispose en outre de moyens de commande de l'unité 11 de modulation et de moyens de commutation pour réaliser soit la transmission de signaux représentatifs de parole, soit celle de signaux représentatif de données.

De façon correspondante, le dispositif de radiocommunication 20 est relié à une antenne 21 pour recevoir les signaux radio. La sortie de l'antenne 21 est reliée de manière connue à une chaîne 23 de réception radio. Une telle chaîne de réception de signaux radio est bien connue dans l'état de la technique et ne sera pas décrit plus en détail.

La sortie de la chaîne de réception 23 est reliée à l'entrée d'un décodeur de parole 25. Ce décodeur de parole 25 est du type correspondant à celui du codeur 13, c'est-à-dire du type FR, EFR ou HR.

La sortie du décodeur 25 est reliée à l'entrée d'une unité de démodulation numérique 27 de phase ou de fréquence. Cette unité 27 de démodulation numérique est une unité correspondante à l'unité de modulation numérique 11. Elle met en oeuvre la même modulation numérique que l'unité 11, mais en sens inverse afin d'extraire les données des signaux décodés mais encore modulés en sortie du décodeur 25. Dans le présent exemple, l'unité de démodulation numérique met en oeuvre une démodulation MSK des signaux reçus du décodeur de parole 25 pour délivrer des données transmises par voie radio sur le canal parole du système de radiotélécommunication.

Par la suite, on décrira le principe de l'invention et le fonctionnement des dispositifs 10 et 20 de radiocommunication selon l'invention.

De façon surprenante, la Demanderesse a trouvé que dans certaines circonstances, les signaux résultant d'une modulation numérique de phase ou de fréquence de signaux représentatifs de données, peuvent passer un codeur/décodeur de parole et être transportées via le canal parole d'un système de radio-télécommunication sans être trop dégradés, ce qui permet l'échange de données via le canal parole d'un système de radiotéléphonie.

A partir de cette découverte, la Demanderesse a réalisé des expériences pour trouver des caractéristiques, en particulier de la modulation/ démodulation des données à transmettre et à recevoir afin d'optimiser le taux d'erreur ou d'augmenter le débit de données à transmettre.

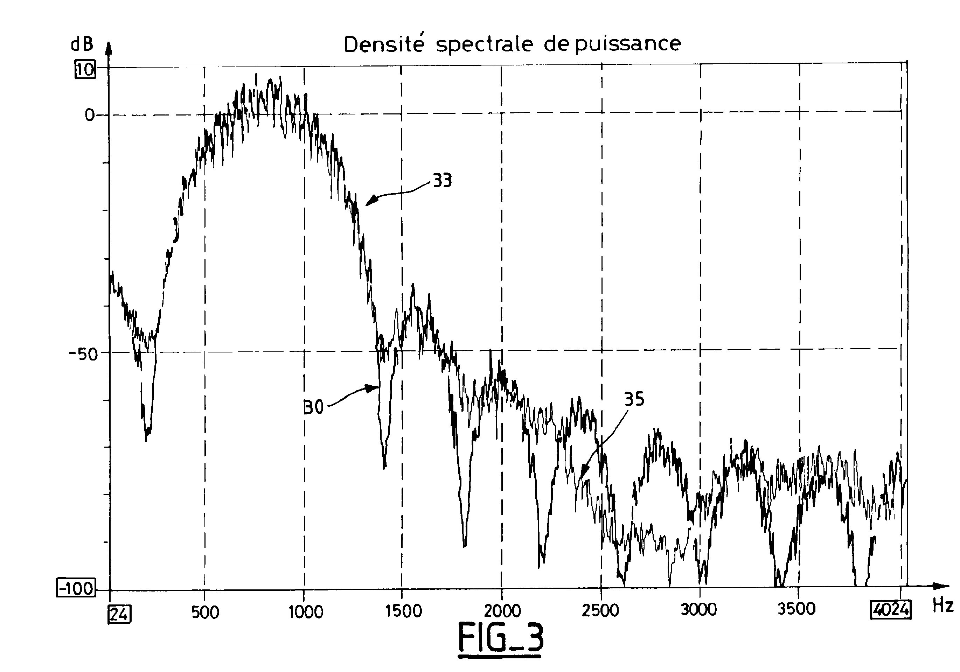

Sur la figure 3 est représenté un graphique montrant la densité spectrale de puissance en dB d'un spectre de modulation MSK en fonction de la fréquence.

Sur cette figure, la courbe 30 représente le spectre de modulation MSK d'un signal de données de 800bits /s et une fréquence porteuse de 800Hz.

La courbe 35 représente le même signal que celui de la courbe 30, mais après passage dans un codeur, puis dans un décodeur de parole FR, donc l'équivalent des codeur 13 et décodeur 25 de la figure 2.

Toutes les modulations numériques à amplitudes constante, telle que la modulation MSK, présentent un spectre de puissance avec un lobe principal 33 centré autour de la fréquence porteuse f_{c}.

La largeur du lobe principal 33 dépend essentiellement du débit D des données à moduler. Ainsi, lorsque le débit D augmente, la largeur du lobe principal 33 du spectre tel que représenté sur la figure 3 augmente aussi.

Ainsi, que l'on peut voir sur cette figure, la majorité de la puissance du signal avant et après passage dans le codeur de parole puis dans le décodeur correspondant est confinée dans le lobe principal 33 centré autour de la fréquence porteuse f_{c} égale à 800Hz.

Dans ces conditions, on voit que le spectre de puissance n'est pratiquement pas dégradé dans la plage de fréquences du lobe principal 33. En revanche, pour les fréquences en dehors du lobe principal 33, dans le présent exemple au dessus de 1400Hz, le spectre MSK est fortement dégradé et inutilisable pour une transmission de données.

Avantageusement, le débit D des données à transmettre et la fréquence porteuse f_{c} de la modulation, les deux paramètres qui déterminent la position du maximum du lobe principal 33 et la largeur de celui-ci, sont choisis de manière que la forme du lobe principal du spectre de modulation à l'entrée du codeur de parole soit sensiblement conservé après un passage en dans le codeur de parole, puis dans un décodeur de parole correspondant.

En effet, la conservation de la forme du lobe principal 33 est un bon critère pour juger de la qualité de la transmission de données via les codeur - décodeur et le canal parole. La transmission des données via le canal parole avec les dispositifs selon l'invention est d'autant plus efficace que la forme du lobe principal 33 est conservée.

De préférence l'unité de modulation numérique 11 est configurée de manière qu'au moins 75% de la puissance des signaux modulés représentatifs des données soit confinée dans le lobe principal du spectre de modulation de phase ou de fréquence.

Selon un mode de réalisation avantageux, la fréquence porteuse f_{c} de la modulation est approximativement égale à 0,78 * D.

Bien entendu, le débit des données et la fréquence porteuse de la modulation numérique de ladite unité sont choisies de manière que le taux d'erreur de transmission des données est égal ou inférieur à un seuil prédéterminé.

Selon un premier mode de réalisation le seuil de taux d'erreur de transmission est égale à 10⁻³. Ceci correspond à une transmission de données ne nécessitant pas une grande fiabilité.

Pour des données plus sensibles, le seuil de taux d'erreur de transmission est de préférence égale à 10⁻⁵.

Dans le cas où le codeur de parole est un codeur FR ayant un premier échantillonnage à 2kHz et un second échantillonnage à 8kHz, il est préférable de limiter le débit maximal de transmission de données à une valeur inférieure ou égale à 1200bits/s et une fréquence porteuse f_{c} inférieure ou égale à 1300Hz.

Lors de la transmission de données via le canal parole, les données sont tout d'abord soumises dans l'unité 11 à une modulation numérique de phase ou de fréquence, comme par exemple une modulation MSK. Puis, ces données passent dans le codeur de parole 13 et elles sont enfin préparées pour être transmises via le canal parole à un dispositif de réception 20 correspondant.

Au dispositif de réception 20, les signaux reçus sont traités dans la chaîne de réception, puis introduit dans le décodeur 25 et enfin, l'unité 27 extrait les données des signaux en sortie du décodeur 25.

D'après la description ci-dessus, on comprend que la simple modulation numérique de phase ou de fréquence des données à transmettre permet une transmission de données efficace et à faible coup pour l'utilisateur.

## Revendications

1. Dispositif de radiocommunication (10) pour la transmission de données via le canal parole d'un système de radio-télécommunications, comprenant un codeur de parole (13) pour coder des signaux représentatifs de parole en vue de la transmission radio de ces signaux via un canal parole, caractérisé en ce qu'il comprend en outre une unité (11) de modulation numérique de phase ou de fréquence de signaux échantillonnés représentatifs de données, dont la sortie est directement connectée à l'entrée dudit codeur de parole (13) en vue de la transmission des signaux modulés représentatifs de données via le canal parole.

2. Dispositif selon la revendication 1, caractérisé en ce que le débit D des données à transmettre et la fréquence porteuse f_{c} de la modulation sont choisis de manière que la forme du lobe principal (33) du spectre de modulation à l'entrée du codeur de parole soit sensiblement conservé après un passage dans le codeur de parole, puis dans un décodeur de parole correspondant.

3. Dispositif selon la revendication 2, caractérisé en ce que ladite unité (11) de modulation numérique est configurée de manière qu'au moins 75% de la puissance des signaux modulés représentatifs des données est confinée dans le lobe principal (33) du spectre de modulation de phase ou de fréquence.

4. Dispositif selon la revendication 2 ou 3, caractérisé en ce que la fréquence porteuse f_{c} de la modulation est approximativement égale à 0,78 * D.

5. Dispositif selon l'une quelconque des revendication 1 à 4, caractérisé en ce que ladite unité de modulation numérique met en oeuvre une modulation MSK.

6. Dispositif selon l'une quelconque des revendications 1 à 5, caractérisé en ce que le débit des données D et la fréquence porteuse f_{c} de la modulation numérique de ladite unité sont choisies de manière que le taux d'erreur de transmission des données est égal ou inférieur à un seuil prédéterminé.

7. Dispositif selon la revendication 6, caractérisé en ce que le seuil de taux d'erreur de transmission est égale à 10⁻³.

8. Dispositif selon la revendication 6, caractérisé en ce que le seuil de taux d'erreur de transmission est égale à 10⁻⁵.

9. Dispositif selon l'une quelconque des revendication 1 à 8, dans lequel le codeur de parole est un codeur FR, caractérisé en ce que le débit D maximal de transmission de données est inférieur ou égale à 1200bits/s.

10. Dispositif selon la revendication 9, caractérisé en ce que la fréquence porteuse f_{c} de la modulation numérique de ladite unité de modulation numérique (11) est inférieure ou égale à 1300Hz.

11. Téléphone mobile, caractérisé en ce qu'il comprend un dispositif selon l'une quelconque des revendications 1 à 10.

12. Equipement de transcodage d'un réseau cellulaire de télécommunications, caractérisé en ce qu'il comprend un dispositif selon l'une quelconque des revendications 1 à 10.

13. Dispositif de radiocommunication pour la réception de données via le canal parole d'un système de radio-télécommunications, comprenant un décodeur de parole (25) pour décoder des signaux représentatifs de parole suite à une réception radio de ces signaux via un canal parole, caractérisé en ce qu'il comprend en outre une unité (27) de démodulation numérique de phase ou de fréquence de signaux échantillonnés modulés représentatives de données, dont l'entrée est directement connectée à la sortie dudit décodeur de parole (25).

14. Dispositif selon la revendication 13, caractérisé en ce que ladite unité (25) de démodulation est une unité correspondant à l'unité (11) de modulation du dispositif de radiocommunication pour la transmission de données selon l'une quelconque des revendications 1 à 10.

15. Téléphone mobile, caractérisé en ce qu'il comprend un dispositif selon la revendication 13 ou 14.

16. Equipement de transcodage d'un réseau cellulaire de télécommunications, caractérisé en ce qu'il comprend un dispositif selon la revendication 13 ou 14.
